(19) Europäisches Patentamt
European Patent Office
Office européen des brevets

(11) **EP 4 667 593 A1**

(12) **EUROPEAN PATENT APPLICATION**
published in accordance with Art. 153(4) EPC

(43) Date of publication:
**24.12.2025 Bulletin 2025/52**

(21) Application number: **24779887.9**

(22) Date of filing: **21.03.2024**

(51) International Patent Classification (IPC):
*C21D 8/02* (2006.01)    *B21B 1/22* (2006.01)
*B32B 15/01* (2006.01)    *C21D 9/00* (2006.01)
*C22C 19/05* (2006.01)    *C22C 38/00* (2006.01)
*C22C 38/58* (2006.01)    *C22F 1/10* (2006.01)
*C22F 1/00* (2006.01)

(52) Cooperative Patent Classification (CPC):
**B21B 1/22; B32B 15/01; C21D 8/02; C21D 9/00;
C22C 19/05; C22C 38/00; C22C 38/58; C22F 1/10;**
C22F 1/00

(86) International application number:
**PCT/JP2024/011140**

(87) International publication number:
**WO 2024/203768 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023 JP 2023052345**

(71) Applicant: **JFE Steel Corporation
Tokyo 100-0011 (JP)**

(72) Inventors:
• **IKEDA, Hiroshi
  Tokyo 100-0011 (JP)**
• **SAKAI, Ryosuke
  Tokyo 100-0011 (JP)**
• **SHIMAMURA, Junji
  Tokyo 100-0011 (JP)**

(74) Representative: **Hoffmann Eitle
Patent- und Rechtsanwälte PartmbB
Arabellastraße 30
81925 München (DE)**

(54) **METHOD FOR MANUFACTURING CLAD STEEL SHEET**

(57)    Provided is a method capable of producing a thick clad steel plate having excellent low-temperature toughness while securing a tensile strength of 535 MPa or more. The method includes: stacking a first raw material plate having a defined chemical composition and a second raw material plate made of a corrosion-resistant alloy to obtain a clad slab; heating the clad slab to a defined temperature; hot rolling the clad slab under defined conditions to obtain a clad rolled plate in which the first raw material plate and the second raw material plate are joined together to become a base steel plate and a cladding metal plate, respectively; allowing the clad rolled plate to be naturally cooled; reheating the cooled clad rolled plate to 850 °C to 1050 °C; cooling the reheated clad rolled plate so that the average cooling rate in the base steel plate is 2 °C/s to 20 °C/s; and tempering the clad rolled plate at 450 °C to 650 °C.

**Description**

TECHNICAL FIELD

The present disclosure relates to a method of producing a clad steel plate, and in particular to a method of producing a clad steel plate suitable for use as a material for a line pipe.

BACKGROUND

A clad steel plate is a steel plate in which a cladding metal plate made of a corrosion-resistant alloy is joined to a base steel plate such as carbon steel. Clad steel plates can secure equivalent corrosion resistance to solid metal while suppressing the amount of expensive alloying elements used, and therefore have an advantage of being highly economical.

In recent years, oil and natural gas development has expanded to regions in which line pipes are exposed to severe corrosion environments. It is expected that demand for line pipes, which enable economical transportation of oil and natural gas, will grow accordingly. Clad steel plates, and nickel base alloy clad steel plates and austenitic stainless clad steel plates in particular, are expected to be in demand for application to line pipes exposed to severe corrosion environments because of their high corrosion resistance.

In recent years, against the background of line pipe leakage accidents in wet hydrogen sulfide environments, there has been a trend toward safer designs. Accordingly, clad steel plates for line pipes are required to have base steel plates with improved hydrogen-induced cracking resistance (hereinafter also referred to as HIC resistance).

Clad steel plates for line pipes are required to ensure certain mechanical properties, in particular excellent low-temperature toughness, from the viewpoint of preventing brittle cracking of line pipes, in addition to the corrosion resistance of the cladding metal plate.

For example, Patent Literature (PTL) 1 describes such a clad steel plate as follows: "in a clad steel plate comprising a Ni alloy as a cladding metal and a low-alloy steel as a base metal, the chemical composition of the base metal is, in mass %, C: 0.020 % to 0.100 %, Si: 0.10 % to 0.50 %, Mn: 0.75 % to 1.80 %, P: 0.015 % or less, S: 0.0030 % or less, Cu: 0.01 % to 0.50 %, Ni: 0.01 % to 0.45 %, Cr: 0.01 % to 0.50 %, Mo: 0.01 % to 0.50 %, Nb: 0.005 % to 0.080 %, Ti: 0.005 % to 0.030 %, N: 0.0010 % to 0.0060 %, Al: 0.070 % or less, and Ca: 0.0010 % to 0.0040 %, with the balance being Fe and inevitable impurity, for a Ni alloy clad steel plate having excellent low-temperature toughness and HAZ toughness of the base metal and excellent corrosion resistance of the cladding metal".

Further, PTL 2 describes "in a clad steel plate comprising a Ni alloy as a cladding metal and a low-alloy steel as a base metal, the chemical composition of the base metal is, in mass%, C: 0.020 % to 0.100 %, Si: 0.10 % to 0.50 %, Mn: 0.75 % to 1.80 %, P: 0.015 % or less, S: 0.0030 % or less, Cu: 0.01 % to 0.50 %, Ni: 0.01 % to 0.45 %, Cr: 0.01 % to 0.50 %, Mo: 0.01 % to 0.50 %, Nb: 0.005 % to 0.080 %, Ti: 0.005 % to 0.030 %, N: 0.0010 % to 0.0060 %, Al: 0.070 % or less, and Ca: 0.0010 % to 0.0040 %, with the balance being Fe and inevitable impurity, for a Ni alloy clad steel plate having excellent low-temperature toughness and HAZ toughness of the base metal and excellent corrosion resistance of the cladding metal".

Further, PTL 3 describes "in a clad steel plate comprising an austenitic stainless steel as a cladding metal and a low-alloy steel as a base metal, the base metal contains, in mass%, C: 0.020 % to 0.100 %, Si: 0.10 % to 0.50 %, Mn: 0.75 % to 1.80 %, P: 0.015 % or less, S: 0.0030 % or less, Cu: 0.01 % to 0.50 %, Ni: 0.01 % to 0.45 %, Cr: 0.01 % to 0.50 %, %, Mo: 0.01 % to 0.50 %, Nb: 0.005 % to 0.080 %, Ti: 0.005 % to 0.030 %, N: 0.0010 % to 0.0060 %, Al: 0.070 % or less, and Ca: 0.0010 % to 0.0040 %, with the balance being Fe and inevitable impurity, for an austenitic stainless steel clad steel plate having excellent low-temperature toughness and HAZ toughness of the base metal and excellent corrosion resistance of the cladding metal".

Further, PTL 4 describes "a clad steel plate in which a cladding metal made of a corrosion-resistant alloy is bonded to one side of a base steel plate, the base steel plate comprising a chemical composition containing, in mass%, C: 0.020 % to 0.100 %, Si: 0.05 % to 0.50 %, Mn: 0.75 % to 1.80 %, P: 0.015 % or less, S: 0.0030 % or less, Al: 0.010 % to 0.070 %, Nb: 0.005 % to 0.080 %, Ti: 0.005 % to 0.030 %, and N: 0.0010 % to 0.0060 %, with the balance being Fe and inevitable impurity, the base steel plate having a steel microstructure at a 1/2 thickness position in the thickness direction of the base steel plate with an area fraction of 94 % or more bainite and 6 % or less martensite austenite constituent, with the average grain size of the bainite being 25 μm or less, and further, joint interface shear strength between the base steel plate and the cladding metal is 300 MPa or more".

Further, PTL 5 describes, as a technology aimed at improving HIC resistance, as "a clad steel plate that has excellent HIC resistance and further improves low-temperature toughness while securing a tensile strength of 535 MPa or more", "in a clad steel plate comprising a cladding metal made of a corrosion-resistant alloy bonded to one side of a base steel plate, the base steel plate has a chemical composition in which ACR and PHIC values are appropriately controlled, the base steel plate has a steel microstructure at a 1/2 thickness position in the thickness direction of the base steel plate with an area fraction of 94 % or more bainite, with the average grain size of the bainite being 25 μm or less, and further, joint interface shear strength between the base steel plate and the cladding metal is 300 MPa or more".

CITATION LIST

Patent Literature

PTL 1: JP 2015-086422 A
PTL 2: JP 2015-117408 A
PTL 3: JP 2015-105399 A
PTL 4: WO 2018/181381 A1
PTL 5: WO 2020/004410 A1

SUMMARY

(Technical Problem)

In the techniques described in PTL 1 to PTL 3, a thermo-mechanical control process (TMCP) is used to provide appropriate mechanical properties such that plate thickness is 30 mm or less, tensile strength is 535 MPa or more, and DWTT $SA_{-20\,°C}$ is 85 % or more, together with an appropriate corrosion resistance of the cladding metal, without impairing productivity. Further, in PTL 4, the mechanical property of DWTT $SA_{-30\,°C}$ being 85 % or more is realized by directly quenching and tempering the clad slab after rolling. PTL 5 describes a clad steel plate that achieves the mechanical property of DWTT $SA_{-30\,°C}$ being 85 % or more and also has HIC resistance by directly quenching and tempering the clad slab after rolling, as in PTL 4.

Here, DWTT $SA_{-20\,°C}$ and DWTT $SA_{-30\,°C}$ refer to percent shear area obtained when test temperatures are -20 °C and -30 °C, respectively, in a drop weight tear test (DWTT) conforming to API-5L.

In order to improve low-temperature toughness, which is emphasized in the present disclosure, it is important to refine the microstructure of the base steel plate of the clad steel plate. In the techniques described in PTL 1 to PTL 5, a defined rolling reduction in a specific temperature range during rolling is secured, and accelerated cooling is carried out, thereby avoiding grain coarsening associated with high-temperature transformation and achieving appropriate transformation strengthening. However, when the thickness of a clad steel plate is large, for example 25 mm or more, not only does it become difficult to impart rolling strain to the inside of the steel plate, but also with regard to accelerated cooling, it becomes difficult to achieve the desired cooling rate up to the center of the plate thickness, because the cooling behavior of the steel plate is rate-limited by the thermal conductivity of the steel plate. As a result, it is not possible to achieve fine grains as in the case of thinner clad steel plates, and there is still room for improvement in low-temperature toughness, so there was a demand for production technology that could achieve high strength and excellent low-temperature toughness in thicker clad steel plates.

In view of the above problems, it would be helpful to provide a method of producing a clad steel plate that is capable of producing a thick clad steel plate having excellent low-temperature toughness while securing a tensile strength of 535 MPa or more.

Further, it would be helpful to provide a method of producing a clad steel plate that is capable of producing a thick clad steel plate having excellent low-temperature toughness and HIC resistance while securing a tensile strength of 535 MPa or more.

The term "excellent low-temperature toughness" means that the percent shear area obtained by a DWTT test (test temperature: -30 °C) in accordance with API-5L, expressed as DWTT $SA_{-30\,°C}$, is 85 % or more. Further, "excellent HIC resistance" means that a crack area ratio (CAR) obtained by a HIC test in accordance with NACE Standard TM0284-2003 is 5.0 % or less.

(Solution to Problem)

The inventors conducted various studies in order to develop a thick clad steel plate having improved low-temperature toughness while securing defined tensile properties, and obtained the following findings.

(A) In order to obtain excellent low-temperature toughness, it is useful to achieve both refining of microstructure that increases the resistance to brittle crack propagation in the base steel plate and decreasing hard phase that can become an initiation point of a brittle crack. For these purposes, it is preferable that the steel structure of the base steel plate is a microstructure mainly composed of bainite. Specifically, it is effective to set the area fraction of bainite at a 1/2 thickness position in the thickness direction of the base steel plate to 94 % or more and the average grain size of bainite to 23 μm or less.

(B) In order to achieve the microstructure control described above, it is important to appropriately control the chemical composition and production conditions, and in particular, to apply reheating quenching and tempering after rolling of the clad slab, and to appropriately control these conditions.

The present disclosure is made based on these findings, and primary features are as described below.

[1] A method of producing a clad steel plate, the method comprising:

a process of preparing a first raw material plate that has a chemical composition containing (consisting of), in mass%,

C: 0.020 % or more and 0.100 % or less,
Si: 0.10 % or more and 0.50 % or less,
Mn: 0.75 % or more and 1.80 % or less,
P: 0.015 % or less,
S: 0.0030 % or less,
Al: 0.01 % or more and 0.07 % or less,
Nb: 0.005 % or more and 0.080 % or less,
Ti: 0.005 % or more and 0.030 % or less,
N: 0.0010 % or more and 0.0060 % or less, and
O, oxygen: 0.0030 % or less,

and further, at least one selected from the group consisting of

Cu: 0.50 % or less,
Ni: 0.50 % or less,
Cr: 0.50 % or less,
Mo: 0.50 % or less,
V: 0.100 % or less, and
Ca: 0.0040 % or less,

with the balance being Fe and inevitable impurity, and where Ceq as defined by the following Expression (1) is 0.40 or more and 0.50 or less;
a process of preparing a second raw material plate made of a corrosion-resistant alloy;
a process of stacking the first raw material plate(s) and the second raw material plate(s) to obtain a clad slab;
a process of heating the clad slab to 1050 °C or more and 1200 °C or less;
then a process of hot rolling the clad slab with a rolling finish temperature of 900 °C or more to join the first raw material plate and the second raw material plate, forming a base steel plate and a cladding metal plate, respectively, to obtain a clad rolled plate;
a process of allowing the clad rolled plate to be naturally cooled;
then a process of reheating the clad rolled plate to 850 °C or more and 1050 °C or less;
then a process of cooling the reheated clad rolled plate so that an average cooling rate of the base steel plate is 2 °C/s or more and 20 °C/s or less; and
then a process of tempering the cooled clad rolled plate at 450 °C or more and 650 °C or less;
to produce the clad steel plate by joining the cladding metal plate to one side of the base steel plate,

$$Ceq = C + Mn/6 + (Cu + Ni)/15 + (Cr + Mo + V)/5 \qquad ...(1)$$

where the element symbols in Expression (1) represent content in mass% of each element, and zero is substituted when the element is not contained.

[2] The method of producing a clad steel plate according to [1], above, wherein, in the chemical composition of the first raw material plate, the Ca content is, in mass%, 0.0005 % or more and 0.0040 % or less, ACR as defined by the following Expression (2) is 1.00 or more and 6.00 or less, and $P_{HIC}$ as defined by the following Expression (3) is less than 1.250,

$$ACR = \{Ca - (0.18 + 130Ca) \times O\}/(1.25S) \qquad ...(2)$$

$$P_{HIC} = 4.46C + 2.37Mn/6 + (1.18Cr + 1.95Mo + 1.74V)/5 + (1.74Cu + 1.7Ni)/15 + 22.36P \qquad (3)$$

where the element symbols in Expression (2) and Expression (3) represent content in mass% of each element, and zero is substituted when the element is not contained.

[3] The method of producing a clad steel plate according to [1] or [2], above, wherein the corrosion-resistant alloy is a Ni alloy selected from Alloy 825 and Alloy 625, or an austenitic stainless steel.

[4] The method of producing a clad steel plate according to any one of [1] to [3], above, wherein the clad slab is obtained by stacking, in the following order: a first raw material plate, a second raw material plate, another second raw material plate, and another first raw material plate, and by applying separating agent between the two second raw material plates, thereby obtaining two clad rolled plates by the hot rolling, and

after the tempering, the two clad rolled plates are separated with the separating agent.

(Advantageous Effect)

According to a first embodiment of the present disclosure, it is possible to produce a thick clad steel plate that has excellent low-temperature toughness while securing a tensile strength of 535 MPa or more.

Further, according to a second embodiment of the present disclosure, it is possible to produce a thick clad steel plate that has excellent low-temperature toughness and HIC resistance while securing a tensile strength of 535 MPa or more.

DETAILED DESCRIPTION

An embodiment of the present disclosure relates to a method of producing a clad steel plate in which a cladding metal plate is joined to one side of a base steel plate. The method of producing a clad steel plate according to the present embodiment includes: a process of stacking a first raw material plate having a defined chemical composition with a second raw material plate made of a corrosion-resistant alloy to obtain a clad slab; a process of heating the clad slab to a defined heating temperature; and then a process of hot rolling the clad slab under defined conditions to obtain a clad rolled plate in which the first raw material plate and the second raw material plate are joined together to become a base steel plate and a cladding metal plate, respectively; a process of allowing the clad rolled plate to be naturally cooled; then a reheating quenching process in which the clad rolled plate is reheated to a defined reheating temperature and then cooled; and then a process of tempering the clad rolled plate at a defined tempering temperature. The first raw material plate is a material for the base steel plate, and the second raw material plate is a material for the cladding metal plate.

The thickness of the clad steel plate produced according to the present embodiment (the total thickness of the base steel plate and the cladding metal plate) is 25 mm or more. The thickness of the clad steel plate is preferably 30 mm or more. There is no particular upper limit to the thickness of the clad steel plate produced according to the present embodiment. The thickness of the clad steel plate is preferably, for example, 50 mm or less. Further, in the clad steel plate produced according to the present embodiment, the thickness of the base steel plate is preferably 8 mm or more. The thickness of the base steel plate is preferably 46 mm or less. The thickness of the cladding metal plate is preferably 3.0 mm or more. The thickness of the cladding metal plate is preferably 4.0 mm or less.

1. Chemical composition of the base steel plate and the first raw material plate

The chemical compositions of the base steel plate and the first raw material plate are described below. Hereinafter, the unit "%" relating to the content of elements in a chemical composition refers to "mass%" unless specified otherwise.

(1-1) First embodiment

According to the first embodiment, the chemical composition of the base steel plate and the first raw material plate is, in mass%, C: 0.020 % or more and 0.100 % or less, Si: 0.10 % or more and 0.50 % or less, Mn: 0.75 % or more and 1.80 % or less, P: 0.015 % or less, S: 0.0030 % or less, Al: 0.01 % or more and 0.07 % or less, Nb: 0.005 % or more and 0.080 % or less, Ti: 0.005 % or more and 0.030 % or less, N: 0.0010 % or more and 0.0060 % or less, and O (oxygen): 0.0030 % or less, and further contains at least one selected from the group consisting of Cu: 0.50 % or less, Ni: 0.50 % or less, Cr: 0.50 % or less, Mo: 0.50 % or less, V: 0.100 % or less, and Ca: 0.0040 % or less, with the balance being Fe and inevitable impurity. The first embodiment has a chemical composition necessary for achieving a tensile strength of 535 MPa or more and excellent low-temperature toughness.

C: 0.020 % or more and 0.100 % or less

C is an element that contributes to strengthening by precipitation in the form of carbides. When C content is less than 0.020 %, it is not possible to ensure sufficient strength in the base steel plate. The C content is therefore 0.020 % or more. The C content is preferably 0.030 % or more. On the other hand, when the C content exceeds 0.100 %, the low-temperature toughness of the base steel plate and heat-affected zone toughness degrade, and HIC resistance also degrades. The C content is therefore 0.100 % or less. The C content is preferably 0.080 % or less.

Si: 0.10 % or more and 0.50 % or less

Si is an element added for deoxidizing and for securing the strength of the steel plate through solid solution strengthening. From the viewpoint of obtaining these effects, Si content is 0.10 % or more. The Si content is preferably 0.15 % or more. The Si content is more preferably 0.20 % or more. On the other hand, when the Si content exceeds 0.50 %, toughness and weldability degrade. The Si content is therefore 0.50 % or less. The Si content is preferably 0.40 % or less.

Mn: 0.75 % or more and 1.80 % or less

Mn is an element that is added to secure strength and toughness. From the viewpoint of obtaining these effects, Mn content is 0.75 % or more. The Mn content is preferably 1.00 % or more. On the other hand, when the Mn content exceeds 1.80 %, weldability degrades. The Mn content is therefore 1.80 % or less. The Mn content is preferably 1.70 % or less.

P: 0.015 % or less

P is an inevitable impurity that degrades weldability. The P content is therefore 0.015 % or less. The P content is preferably 0.010 % or less. A lower limit of the P content is not particularly limited, and the P content may be 0.000 % or more.

S: 0.0030 % or less

S generally exists as sulfide inclusions in steel, and causes a degradation in ductility and toughness. Accordingly, S is preferably decreased as much as possible, and S content is 0.0030 % or less. The S content is preferably 0.0010 % or less. A lower limit of the S content is not particularly limited, and the S content may be 0.0000 % or more.

Al: 0.01 % or more and 0.07 % or less

Al is an element added for deoxidization. From the viewpoint of obtaining this effect, Al content is 0.01 % or more. The Al content is preferably 0.02 % or more. On the other hand, when the Al content exceeds 0.07 %, alumina clusters are formed and ductility degrades. The Al content is therefore 0.07 % or less. The Al content is preferably 0.04 % or less.

Nb: 0.005 % or more and 0.080 % or less

Nb is an element effective for increasing the strength of the steel plate by increasing hardenability and through strengthening by precipitation. Further, Nb is effective for broadening austenite non-recrystallization temperature range and contributes to improving toughness through microstructure refining. From the viewpoint of obtaining these effects, Nb content is 0.005 % or more. The Nb content is preferably 0.010 % or more. On the other hand, when the Nb content exceeds 0.080 %, toughness of the heat-affected zone and HIC resistance degrade. The Nb content is therefore 0.080 % or less. The Nb content is preferably 0.060 % or less.

Ti: 0.005 % or more and 0.030 % or less

Ti suppresses coarsening of austenite through a pinning effect due to nitride formation, and contributes to securing toughness of the base metal and the heat-affected zone. Further, Ti is effective for increasing the strength of the steel plate through strengthening by precipitation. From the viewpoint of obtaining these effects, Ti content is 0.005 % or more. The Ti content is preferably 0.010 % or more. On the other hand, when the Ti content exceeds 0.030 %, nitrides coarsen, becoming initiation points of brittle cracks or ductile fracture. The Ti content is therefore 0.030 % or less. The Ti content is preferably 0.020 % or less.

N: 0.0010 % or more and 0.0060 % or less

N suppresses coarsening of austenite through a pinning effect due to nitride formation, and contributes to securing toughness of the base metal and the heat-affected zone. The N content is therefore 0.0010 % or more. The N content is preferably 0.0020 % or more. On the other hand, when the N content exceeds 0.0060 %, toughness of the heat-affected zone degrades. The N content is therefore 0.0060 % or less. The N content is preferably 0.0050 % or less.

In order to fully exhibit the pinning effect due to nitride formation, it is preferable to regulate the ratio of the Ti content to the N content. Specifically, in mass%, when the Ti content/N content ratio is less than 2.0 or exceeds 3.5, the pinning effect due to nitride formation is not fully exhibited, and austenite coarsens, which may result in degradation of toughness. Ti content/N content is therefore preferably 2.0 or more. Ti content/N content is therefore preferably 3.5 or less.

O (oxygen): 0.0030 % or less

O generally exists in steel as oxides of Al and Ca. When O is contained in excess, the amount of oxides in the steel increases, and toughness and HIC resistance degrade. O content is therefore 0.0030 % or less. The O content is preferably 0.0020 % or less. A lower limit of the O content is not particularly limited, and the O content may be 0.0000 % or more.

The chemical composition of the base steel plate and the first raw material plate contains, in addition to the basic components described above, at least one element selected from the group consisting of Cu: 0.50 % or less, Ni: 0.50 % or less, Cr: 0.50 % or less, Mo: 0.50 % or less, V: 0.100 % or less, and Ca: 0.0040 % or less.

Cu: 0.50 % or less, Cr: 0.50 % or less, Mo: 0.50 % or less

Cu, Cr, and Mo are all elements that improve hardenability, and contribute to increasing the strength of the base metal and the heat-affected zone. In order to obtain these effects, when Cu, Cr, and Mo are contained, the content of each element is 0.01 % or more. The content of each element is preferably 0.05 % or more. On the other hand, when the content of any of Cu, Cr, and Mo exceeds 0.50 %, the toughness of the heat-affected zone may degrade. Therefore, when Cu, Cr, and Mo are contained, the content of each element is 0.50 % or less. The content of each element is preferably 0.40 % or less.

Ni: 0.50 % or less

Ni is an element that improves hardenability and contributes to increasing the strength of the base metal and the heat-affected zone. From the viewpoint of obtaining these effects, when Ni is contained, the Ni content is 0.01 % or more. The Ni content is preferably 0.05 % or more. On the other hand, Ni is an expensive element, and therefore containing a large amount of Ni leads to an increase in costs. Therefore, when Ni is contained, the Ni content is 0.50 % or less. The Ni content is preferably 0.40 % or less.

V: 0.100 % or less

V contributes to increasing the strength of the steel plate through strengthening by precipitation. From the viewpoint of obtaining this effect, when V is contained, V content is 0.010 % or more. On the other hand, when the V content exceeds 0.100 %, toughness of the heat-affected zone degrades. Therefore, when V is contained, the V content is 0.100 % or less.

Ca: 0.0040 % or less

Ca fixes S in steel and improves the toughness of the steel plate. From the viewpoint of obtaining these effects, when Ca is contained, Ca content is 0.0010 % or more. On the other hand, when the Ca content exceeds 0.0040 %, the amount of inclusions in the steel increases, which may degrade toughness. Therefore, when Ca is contained, the Ca content is 0.0040 % or less. The Ca content is preferably 0.0030 % or less.

Carbon equivalent Ceq defined by the following Expression (1): 0.40 or more and 0.50 or less

The carbon equivalent Ceq defined by the following Expression (1) is correlated with the strength of the steel plate. In the case of the reheating quenching and tempering process of the method of production according to the present embodiment, in order to obtain a high strength of tensile strength of 535 MPa or more, the carbon equivalent Ceq is 0.40 or more. The carbon equivalent Ceq is preferably 0.42 or more. On the other hand, when the carbon equivalent Ceq is too large, this may lead to a degradation in toughness. The carbon equivalent Ceq is therefore 0.50 or less. The carbon equivalent Ceq is preferably 0.48 or less.

$$Ceq = C + Mn/6 + (Cu + Ni)/15 + (Cr + Mo + V)/5 \qquad ...(1)$$

The element symbols in Expression (1) represent the content in mass% of each element in the base steel plate or the first raw material plate, and zero is substituted when the element is not contained.

(1-2) Second embodiment

The following describes the chemical composition of the base steel plate and the first raw material plate according to the second embodiment, which is necessary for the base steel plate to exhibit excellent HIC resistance in addition to a tensile strength of 535 MPa or more and excellent low-temperature toughness. The following describes differences from the first embodiment and additional features. Items not described below conform to the first embodiment.

P: 0.010 % or less

P is an inevitable impurity that increases the hardness of the central segregation area, thereby degrading HIC resistance. Therefore, when HIC resistance is required, the P content is preferably 0.010 % or less. The P content is more preferably 0.006 % or less. A lower limit of the P content is not particularly limited, and the P content may be 0.000 % or more.

S: 0.0010 % or less

S generally exists as sulfide inclusions in steel, and causes a degradation in toughness and HIC resistance. Therefore, when HIC resistance is required, the S content is preferably 0.0010 % or less. The S content is more preferably 0.0008 % or less. A lower limit of the S content is not particularly limited, and the S content may be 0.0000 % or more.

Ca: 0.0005 % or more and 0.0040 % or less

Ca fixes S in steel and improves the toughness and HIC resistance of the steel plate. From the viewpoint of obtaining these effects, the Ca content is preferably 0.0005 % or more. The Ca content is more preferably 0.0010 % or more. The Ca content is even more preferably 0.0020 % or more. On the other hand, when the Ca content exceeds 0.0040 %, the amount of inclusions in the steel increases, which may degrade the toughness and HIC resistance. Therefore, the Ca content is preferably 0.0040 % or less. The Ca content is more preferably 0.0030 % or less.
When HIC resistance is required, it is preferable to appropriately control the values of ACR and $P_{HIC}$ defined by the following Expressions (2) and (3), respectively.

$$ACR = \{Ca - (0.18 + 130Ca) \times O\}/(1.25S) \qquad ...(2)$$

$$P_{HIC} = 4.46C + 2.37Mn/6 + (1.18Cr + 1.95Mo + 1.74V)/5 + (1.74Cu + 1.7Ni)/15 + 22.36P \qquad (3)$$

The element symbols in Expressions (2) and (3) represent the content in mass% of each element in the base steel plate or the first raw material plate, and zero is substituted when the element is not contained.

ACR: 1.00 or more and 6.00 or less

ACR is a numerical value that serves as an index of the effect of Ca in suppressing the formation of MnS. MnS in steel has an effect on hydrogen-induced cracking, and in order to improve HIC resistance, it is effective to fix S in the steel with Ca and suppress the formation of MnS. When ACR is 1.00 or more, the effect of suppressing the formation of MnS is sufficiently exhibited. For this reason, ACR is preferably 1.00 or more. ACR is more preferably 1.40 or more. On the other hand, when the ACR value exceeds 6.00, although the formation of MnS is suppressed, a large amount of Ca oxides is formed, which instead degrades the HIC resistance. ACR is therefore preferably 6.00 or less. ACR is more preferably 3.30 or less.

$P_{HIC}$: less than 1.250

$P_{HIC}$ is a numerical value that serves as an index of the hardness at the central segregation area; a larger value indicates a higher hardness at the central segregation area. The hardness at the central segregation area affects hydrogen-induced cracking, and therefore in order to improve HIC resistance, it is effective to suppress an increase in hardness at the central segregation area. For this reason, $P_{HIC}$ is preferably less than 1.250. $P_{HIC}$ is more preferably 1.000 or less. There is no particular restriction on a lower limit of $P_{HIC}$. From the viewpoint of securing sufficient strength in the base steel plate, $P_{HIC}$ is preferably 0.750 or more.

2. Microstructure of base steel plate (preferred conditions)

In the clad steel plate produced according to the present embodiment, the base steel plate preferably has the following microstructure.

Area fraction of bainite at a 1/2 thickness position in the thickness direction of the base steel plate: 94 % or more

Bainite is an important microstructure for both strength and low-temperature toughness. Further, bainite effectively contributes to improving the strength of the steel plate through transformation strengthening. For this reason, the steel microstructure of the base steel plate is preferably a microstructure mainly composed of bainite. Specifically, the area fraction of bainite at a 1/2 thickness position in the thickness direction of the base steel plate (hereinafter also referred to simply as "1/2 thickness position") is preferably 94 % or more. The area fraction of bainite is more preferably 97 % or more, and may be 100 %.

The steel microstructure of the base steel plate needs to be basically composed of bainite, but may contain trace amounts of martensite austenite constituent (MA), ferrite, cementite, and the like, as residual microstructure other than bainite. A total area fraction of the residual microstructure at the 1/2 thickness position of 6 % or less is allowable. The area fraction of the residual microstructure may be 0 %. When the area fraction of the residual microstructure exceeds 6 %, the area fraction of bainite becomes small, and there is a risk that it will not be possible to achieve both strength and low-temperature toughness, which is undesirable.

As used herein, the area fraction of each phase at the 1/2 thickness position is determined as follows. That is, the L-section of the base steel plate (a cross-section parallel to the rolling direction and parallel to the normal direction) is mirror-polished, and then corroded with nital or electrolytic etching (electrolyte solution: 100 ml distilled water + 25 g sodium hydroxide + 5 g picric acid), and a scanning electron microscope (SEM) is used to observe a randomly selected region of $1.2 \times 10^{-2}$ mm$^2$ at a magnification of 2000× at the 1/2 thickness position of the L-section, and image interpretation is carried out to determine the values.

Average grain size of bainite at 1/2 thickness position: 23 $\mu$m or less

The grain boundaries of bainite act as resistance to the propagation of brittle cracks, and therefore refinement of the crystal grains increases grain boundaries, which contributes to improving low-temperature toughness. Therefore, the average grain size of bainite at the 1/2 thickness position is preferably 23 $\mu$m or less. The average grain size of bainite at the 1/2 thickness position is more preferably 20 $\mu$m or less. There is no particular lower limit to the average grain size. The average grain size may be 5 $\mu$m or more.

As used herein, the average grain size of bainite is determined as follows. After mirror polishing an L-section (a section parallel to the rolling direction and parallel to the normal direction) of the base steel plate, the crystal orientation of a $1.2 \times 10^{-2}$ mm$^2$ region randomly selected at the 1/2 thickness position of the L-section is measured by electron backscatter diffraction (EBSP), and the region where the angle difference between adjacent pixels is 15° or more is determined as a grain boundary by image interpretation. The average grain size $d_{area}$ can be calculated from the area $a_i$ occupied by each crystal grain and the circle equivalent diameter $d_i$ of each crystal grain according to the following expression.

$$d_{area} = \sum(a_i \cdot d_i)/\sum a_i$$

3. cladding metal plate and second raw material plate

According to the present embodiment, the cladding metal plate and the second raw material plate are made of a corrosion-resistant alloy. The corrosion resistant alloy is preferably a Ni alloy or an austenitic stainless steel. In particular, a Ni alloy is preferred because it exhibits high stress corrosion cracking resistance in an environment under high hydrogen sulfide partial pressure (that is, a sour environment). The Ni alloy is, for example, Alloy 625 or Alloy 825, and from the viewpoint of stress corrosion cracking resistance, Alloy 625 is particularly preferable.

The following describes suitable chemical compositions of the cladding metal plate and the second raw material plate. Hereinafter, the unit "%" relating to the content of elements in a chemical composition refers to "mass%" unless specified otherwise.

(3-1) Preferred chemical composition of Alloy 625

Alloy 625 is a Ni alloy equivalent to NCF625 of JIS G 4902:2019, and preferably a Ni alloy having a chemical composition containing, in mass%, C: 0.030 % or less, Si: 0.02 % to 0.50 %, Mn: 0.02 % to 0.50 %, P: 0.010 % or less, S: 0.0010 % or less, Cr: 20.0 % to 23.0 %, Mo: 8.00 % to 10.00 %, Fe: 5.0 % or less, Al: 0.02 % to 0.40 %, Ti: 0.10 % to 0.40 %, and a total amount of Nb and Ta: 3.15 % to 4.15 %, with the balance being Ni and inevitable impurity.

C: 0.030 % or less

C precipitates on grain boundaries as carbides due to thermal history during the production of the clad steel plate, causing degradation in corrosion resistance. C content exceeding 0.030 % promotes precipitation of carbides and causes degradation in corrosion resistance. The C content is therefore preferably 0.030 % or less. The C content is more preferably 0.020 % or less. A lower limit of the C content is not particularly limited, and the C content may be 0.000 % or more.

Si: 0.02 % to 0.50 %

Si is added for deoxidation. From the viewpoint of obtaining this effect, Si content is preferably 0.02 % or more. On the other hand, when the Si content exceeds 0.50 %, corrosion resistance degrades. The Si content is therefore preferably 0.50 % or less. The Si content is more preferably 0.20 % or less.

Mn: 0.02 % to 0.50 %

Mn is added for deoxidation. From the viewpoint of obtaining this effect, Mn content is preferably 0.02 % or more. On the other hand, when the Mn content exceeds 0.50 %, corrosion resistance degrades. The Mn content is therefore preferably 0.50 % or less. The Mn content is more preferably 0.15 % or less.

P: 0.010 % or less

P is an impurity element that segregates at grain boundaries, causing degradation in corrosion resistance. P content is therefore preferably 0.010 % or less. The P content is more preferably 0.005 % or less. A lower limit of the P content is not particularly limited, and the P content may be 0.000 % or more.

S: 0.0010 % or less

S, like P, is an impurity element that segregates at grain boundaries, causing degradation in corrosion resistance. The S content is therefore preferably 0.0010 % or less. The S content is more preferably 0.0005 % or less. A lower limit of the S content is not particularly limited, and the S content may be 0.0000 % or more.

Cr: 20.0 % to 23.0 %

Cr forms a highly protective oxide coating on the surface of metal and improves pitting corrosion resistance and intergranular corrosion resistance. Further, Cr improves stress corrosion cracking resistance in a sour environment when added in combination with Ni. From the viewpoint of obtaining these effects, Cr content is preferably 20.0 % or more. The Cr content is more preferably 21.5 % or more. However, from the viewpoint of the balance with Ni and other alloys, the Cr content is preferably 23.0 % or less.

Mo: 8.00 % to 10.00 %

Mo improves pitting corrosion resistance and crevice corrosion resistance. Further, Mo improves stress corrosion cracking resistance in a sour environment when added in combination with Ni. From the viewpoint of obtaining these effects, Mo content is preferably 8.00 % or more. However, from the viewpoint of the balance with Ni and other alloys, the Mo content is preferably 10.00 % or less.

Fe: 5.0 % or less

Fe is an impurity that is inevitably contained in the steel composition when ferrochrome, ferromolybdenum, or the like is used as a raw material, and an Fe content greater than 5.0 % degrades corrosion resistance. The Fe content is therefore preferably 5.0 % or less. The Fe content is more preferably 3.5 % or less. A lower limit of the Fe content is not particularly limited, and the Fe content may be 0.0 % or more.

Al: 0.02 % to 0.40 %

Al is an effective deoxidizing element. From the viewpoint of obtaining this effect, Al content is preferably 0.02 % or more. On the other hand, when the Al content exceeds 0.40 %, stress corrosion cracking resistance degrades. The Al content is therefore preferably 0.40 % or less. The Al content is more preferably 0.25 % or less.

Ti: 0.10 % to 0.40 %

Ti fixes C that degrades corrosion resistance by precipitating C as carbides. From the viewpoint of obtaining this effect, Ti content is preferably 0.10 % or more. On the other hand, when the Ti content exceeds 0.40 %, Ti precipitates as an intermetallic compound, which decreases bondability with the base steel plate. The Ti content is therefore preferably 0.40 % or less. The Ti content is more preferably 0.30 % or less.

Total amount of Nb and Ta: 3.15 % to 4.15 %

Both Nb and Ta are effective in fixing C. From the viewpoint of obtaining this effect, the total amount of Nb and Ta is preferably 3.15 % or more. On the other hand, when the total amount of Nb and Ta exceeds 4.15 %, Nb and Ta form intermetallic compounds having a low melting point, which degrade hot workability. The total amount of Nb and Ta is therefore preferably 4.15 % or less.

The balance, or components other than those described above, is Ni and inevitable impurity. Ni is an element for improving corrosion resistance, and in particular, significantly improves stress corrosion cracking resistance in a sour environment. The Ni content is therefore preferably 58 % or more.

(3-2) Preferred chemical composition of Alloy 825

Alloy 825 is a Ni alloy equivalent to NCF825 of JIS G 4902:2019, and preferably a Ni alloy having a chemical composition containing, in mass%, C: 0.020 % or less, Si: 0.50 % or less, Mn: 1.00 % or less, P: 0.030 % or less, S: 0.0050 % or less, Ni: 38.0 % to 46.0 %, Cr: 19.5 % to 23.5 %, Mo: 2.50 % to 3.50 %, Cu: 1.50 % to 3.00 %, Al: 0.01 % to 0.20 %, and Ti: 0.60 % to 1.20 %, with the balance being Fe and inevitable impurity.

C: 0.020 % or less

C precipitates on grain boundaries as carbides due to thermal history during the production of the clad steel plate, causing degradation in corrosion resistance. C content exceeding 0.020 % promotes precipitation of carbides and causes degradation in corrosion resistance. The C content is therefore preferably 0.020 % or less. The C content is more preferably 0.015 % or less. A lower limit of the C content is not particularly limited, and the C content may be 0.000 % or more.

Si: 0.50 % or less

Si is added for deoxidation. However, when the Si content exceeds 0.50 %, Si remains as a nonmetallic inclusion, causing degradation in corrosion resistance. The Si content is therefore preferably 0.50 % or less. The Si content is more preferably 0.20 % or less. A lower limit of the Si content is not particularly limited. From the viewpoint of obtaining a sufficient deoxidizing effect, the Si content is preferably 0.02 % or more.

Mn: 1.00 % or less

Mn is added for deoxidation. However, when the Mn content exceeds 1.00 %, corrosion resistance degrades. The Mn content is therefore preferably 1.00 % or less. The Mn content is more preferably 0.50 % or less. A lower limit of the Mn content is not particularly limited. From the viewpoint of obtaining a sufficient deoxidizing effect, the Mn content is preferably 0.02 % or more.

P: 0.030 % or less

P is an impurity element that segregates at grain boundaries, causing degradation in corrosion resistance. P content is therefore preferably 0.030 % or less. The P content is more preferably 0.020 % or less. A lower limit of the P content is not particularly limited, and the P content may be 0.000 % or more.

S: 0.0050 % or less

S, like P, is an impurity element that segregates at grain boundaries, causing degradation in corrosion resistance. The S content is therefore preferably 0.0050 % or less. The S content is more preferably 0.0010 % or less. A lower limit of the S content is not particularly limited, and the S content may be 0.0000 % or more.

Ni: 38.0 % to 46.0 %

Ni is an element that improves corrosion resistance, and in particular, greatly improves stress corrosion cracking resistance in a sour environment. From the viewpoint of obtaining this effect, Ni content is preferably 38.0 % or more. However, Ni is a very expensive element, and therefore adding a large amount of Ni causes an increase in costs. For this reason, from the viewpoint of balance between the effect of improving corrosion resistance and the cost, the Ni content is preferably 46.0 % or less.

Cr: 19.5 % to 23.5 %

Cr forms a highly protective oxide coating on the surface of metal and improves pitting corrosion resistance and intergranular corrosion resistance. Further, Cr improves stress corrosion cracking resistance in a sour environment when added in combination with Ni. From the viewpoint of obtaining these effects, Cr content is preferably 19.5 % or more. The Cr content is more preferably 21.5 % or more. However, from the viewpoint of the balance with Ni and other alloys, the Cr content is preferably 23.5 % or less.

Mo: 2.50 % to 3.50 %

Mo improves pitting corrosion resistance and crevice corrosion resistance. Further, Mo improves stress corrosion cracking resistance in a sour environment when added in combination with Ni. From the viewpoint of obtaining these effects, Mo content is preferably 2.50 % or more. The Mo content is more preferably 3.00 % or more. However, from the viewpoint of the balance with Ni and other alloys, the Mo content is preferably 3.50 % or less.

Cu: 1.50 % to 3.00 %

Cu improves general corrosion resistance. From the viewpoint of obtaining this effect, Cu content is preferably 1.50 % or more. The Cu content is more preferably 1.80 % or more. On the other hand, when the Cu content exceeds 3.00 %, the effect is saturated, and therefore the Cu content is preferably 3.00 % or less.

Al: 0.01 % to 0.20 %

Al is an effective deoxidizing element. From the viewpoint of obtaining this effect, Al content is preferably 0.01 % or more. The Al content is more preferably 0.10 % or more. On the other hand, when the Al content exceeds 0.20 %, stress corrosion cracking resistance degrades. The Al content is therefore preferably 0.20 % or less. The Al content is more preferably 0.15 % or less.

Ti: 0.60 % to 1.20 %

Ti fixes C that degrades corrosion resistance by precipitating C as carbides. From the viewpoint of obtaining this effect, Ti content is preferably 0.60 % or more. The Ti content is more preferably 0.70 % or more. On the other hand, when the Ti content exceeds 1.20 %, Ti precipitates as an intermetallic compound, which decreases bondability with the base steel plate, and therefore the Ti content is preferably 1.20 % or less.

The balance, or components other than those described above, is Fe and inevitable impurity.

(3-3) Austenitic stainless steel

A suitable chemical composition of the austenitic stainless steel contains, in mass%, C: 0.030 % or less, Si: 1.00 % or less, Mn: 2.00 % or less, P: 0.045 % or less, S: 0.030 % or less, Ni: 12.0 % to 15.0 %, Cr: 16.0 % to 18.0 %, and Mo: 2.00 % to 3.00 %, with the balance being Fe and inevitable impurity.

C: 0.030 % or less

C precipitates on grain boundaries as carbides due to thermal history during the production of the clad steel plate, causing degradation in corrosion resistance. C content exceeding 0.030 % promotes precipitation of carbides and causes degradation in corrosion resistance. The C content is therefore preferably 0.030 % or less. The C content is more preferably 0.020 % or less. The C content is even more preferably 0.015 % or less. A lower limit of the C content is not particularly limited, and the C content may be 0.000 % or more.

Si: 1.00 % or less

When Si content exceeds 1.00 %, Si remains as a nonmetallic inclusion, degrading corrosion resistance. The Si content is therefore preferably 1.00 % or less. The Si content is more preferably 0.75 % or less. A lower limit of the Si content is not particularly limited, and the Si content may be 0.00 % or more.

Mn: 2.00 % or less

When the Mn content exceeds 2.00 %, corrosion resistance degrades. The Mn content is therefore preferably 2.00 % or less. The Mn content is more preferably 1.40 % or less. The Mn content is even more preferably 1.00 % or less. A lower limit of the Mn content is not particularly limited, and the Mn content may be 0.00 % or more.

P: 0.045 % or less

P is an impurity element that segregates at grain boundaries, causing degradation in corrosion resistance. P content is therefore preferably 0.045 % or less. The P content is more preferably 0.030 % or less. A lower limit of the P content is not particularly limited, and the P content may be 0.000 % or more.

S: 0.030 % or less

S, like P, is an impurity element that segregates at grain boundaries, causing degradation in corrosion resistance. The S content is therefore preferably 0.030 % or less. The S content is more preferably 0.010 % or less. A lower limit of the S content is not particularly limited, and the S content may be 0.000 % or more.

Ni: 12.0 % to 15.0 %

Ni is an element that improves corrosion resistance, and in particular, greatly improves stress corrosion cracking resistance in a sour environment. From the viewpoint of obtaining this effect, Ni content is preferably 12.0 % or more. The Ni content is more preferably 12.5 % or more. However, Ni is a very expensive element, and therefore adding a large amount of Ni causes an increase in costs. For this reason, from the viewpoint of the balance between the effect of improving corrosion resistance and the cost, the Ni content is preferably 15.0 % or less. The Ni content is more preferably 14.5 % or less.

Cr: 16.0 % to 18.0 %

Cr forms a highly protective oxide coating on the surface of metal and improves pitting corrosion resistance and intergranular corrosion resistance. Further, Cr improves stress corrosion cracking resistance in a sour environment when added in combination with Ni. From the viewpoint of obtaining these effects, Cr content is preferably 16.0 % or more. The Cr content is more preferably 16.5 % or more. However, from the viewpoint of the balance with Ni and other alloys, the Cr content is preferably 18.0 % or less. The Cr content is more preferably 17.5 % or less.

Mo: 2.00 % to 3.00 %

Mo improves pitting corrosion resistance and crevice corrosion resistance. Further, Mo improves stress corrosion cracking resistance in a sour environment when added in combination with Ni. From the viewpoint of obtaining these effects, Mo content is preferably 2.00 % or more. The Mo content is more preferably 2.20 % or more. However, from the viewpoint of the balance with Ni and other alloys, the Mo content is preferably 3.00 % or less. The Mo content is more preferably 2.80 % or less.

The balance, or components other than those described above, is Fe and inevitable impurity.

4. Method of producing clad steel plate

The method of producing a clad steel plate according to an embodiment of the present disclosure includes: a process of stacking the first raw material plate(s) having the chemical composition described above and the second raw material plate(s) made of a corrosion-resistant alloy to obtain a clad slab; a process of heating the clad slab to 1050 °C or more and 1200 °C or less; and then a process of hot rolling the clad slab with a rolling finish temperature of 900 °C or more to obtain a clad rolled plate in which the first raw material plate and the second raw material plate are joined together to become a base steel plate and a cladding metal plate, respectively; a process of allowing the clad rolled plate to be naturally cooled; then a process of reheating the clad rolled plate to 850 °C or more and 1050 °C or less; then a process of cooling the reheated clad rolled plate so that the average cooling rate in the base steel plate is 2 °C/s or more and 20 °C/s or less; and then a process of tempering the cooled clad rolled plate at 450 °C or more and 650 °C or less.

According to the present embodiment, the temperature conditions defined as production conditions all relate to the surface temperature of the steel plate. The surface temperature of the steel plate may be measured, for example, by using a radiation thermometer.

(4-1) Process for obtaining clad slab

First, a first raw material plate which will become a base steel plate and a second raw material plate which will become a cladding metal plate are stacked to obtain a clad slab. In a vacuum (negative pressure) environment, specifically an environment with a pressure of $10^{-4}$ torr or less, the first raw material plate(s) and the second raw material plate(s) are tack-welded together by, for example, electron beam welding or laser welding, to obtain a clad slab.

Further, it is preferable to form a clad slab by stacking a first raw material plate, a second raw material plate, another second raw material plate, and another first raw material plate in this order, with separating agent being applied between the two second raw material plates. That is, two sets of stacks each formed by a stack of a first raw material plate and a second raw material plate are aligned and stacked on top of another so that the second raw material plates face each other to form a clad slab. The clad slab is hot rolled to obtain two clad rolled plates. After tempering, the two clad rolled plates are separated from each other with separating agent to obtain clad steel plates that serve as product plates. In this case, symmetry in the plate thickness direction is maintained during rolling, and therefore occurrence of warping in the vertical direction during rolling can be suppressed.

(4-2) Clad rolling process

Clad slab heating temperature: 1050 °C to 1200 °C

When the clad slab heating temperature is less than 1050 °C, a rolling reduction ratio cannot be sufficiently secured during rolling from the start of rolling after heating to the rolling finish temperature described below, and the bondability between the base steel plate and the cladding metal plate in the finally-obtained clad steel plate degrades. Further, when the slab heating temperature is less than 1050 °C, Nb and other elements contained in the first raw material plate that becomes the base steel plate are not sufficiently dissolved, making it difficult to secure strength of the base steel plate in the finally-obtained clad steel plate. For this reason, the heating temperature of the clad slab is 1050 °C or more. On the other hand, when the clad slab heating temperature exceeds 1200 °C, austenite coarsens in the first raw material plate that becomes the base steel plate, and the microstructure of the base steel plate cannot be sufficiently refined in the final clad steel plate, and therefore toughness degrades. The clad slab heating temperature is therefore 1200 °C or less. The clad slab heating temperature is preferably 1100 °C or less.

Rolling finish temperature: 900 °C or more

Bondability between the base steel plate and the cladding metal plate in the clad steel plate is secured by carrying out rolling in a high temperature range. That is, during rolling in a high temperature range, deformation resistance of the base steel plate and the cladding metal plate is decreased such that a well-bonded interface is formed, and interdiffusion of elements at the bonded interface is facilitated, with the result that bondability between the base steel plate and the cladding metal plate is secured. For this reason, the rolling finish temperature is 900 °C or more. The rolling finish temperature is preferably 950 °C or more. An upper limit of the rolling finish temperature is not particularly limited. The rolling finish temperature may be 1000 °C or lower.

(4-3) Natural cooling process

After the hot rolling described above is completed, the obtained clad rolled plate is allowed to be naturally cooled. Here, natural cooling refers to a treatment in which the clad rolled plate is not forcibly cooled after rolling, but is instead placed in a pre-determined storage area, such as a yard within a factory, and left there to wait for the temperature of the clad rolled plate to drop. Therefore, the cooling rate is not particularly limited. The cooling stop temperature in the natural cooling may be any temperature as long as it is a temperature at which ferrite transformation completes. In practice, it is common to wait until the temperature drops to near room temperature (for example, 25 °C), but it is not necessary for the temperature to drop to near room temperature. The cooling stop temperature of the natural cooling may be, for example, 100 °C or lower.

(4-4) Reheating and quenching (reheating and cooling)

Next, reheating and quenching is carried out in which the clad rolled plate is reheated and then cooled.

Reheating temperature: 850 °C or more to 1050 °C or less

First, in the reheating treatment, the naturally cooled rolled clad plate is heated to a reheating temperature of 850 °C or more and 1050 °C or less. When the reheating temperature is less than 850 °C, ferrite is formed in the base steel plate prior to bainite transformation, making the target strength unobtainable and also decreasing Charpy absorbed energy. The reheating temperature is therefore 850 °C or more. The reheating temperature is preferably 900 °C or more. On the other hand, when the reheating temperature exceeds 1050 °C, coarsening of austenite grains occurs, resulting in a significant decrease in low-temperature toughness. The reheating temperature is therefore 1050 °C or less. The reheating temperature is preferably to 1000 °C or less.

Average cooling rate in base steel plate: 2 °C/s or more and 20 °C/s or less

Next, the reheated clad rolled plate is subjected to a cooling treatment at an average cooling rate in the base steel plate of 2 °C/s or more and 20 °C/s or less. When the average cooling rate is less than 2 °C/s, ferrite transformation occurs in the base steel plate, making it impossible to obtain the desired strength and resulting in a significant decrease in low-temperature toughness. The average cooling rate is therefore 2 °C/s or more. The average cooling rate is preferably 5 °C/s or more. From the viewpoint of refining the microstructure and decreasing hard phase that may become an initiation point of a brittle crack, the average cooling rate is more preferably 7 °C/s or more. There is no particular upper limit to the average cooling rate, but when the average cooling rate is too high, the strength of the transformed structure increases excessively, which may result in a decrease in Charpy absorbed energy. Therefore, from the viewpoint of preventing a decrease in the Charpy absorbed energy, the average cooling rate is preferably 20 °C/s or less. The average cooling rate is a value obtained by dividing the temperature difference from the cooling start temperature (that is, the reheating temperature) to the cooling end temperature by the time required from the cooling start to the cooling end.
The cooling stop temperature in the reheating quenching is preferably 200 °C or less in order to prevent a decrease in the toughness of the base steel plate. A lower limit of the cooling stop temperature is not particularly limited. The cooling stop temperature may be, for example, 25 °C or more.

(4-5) Tempering process

Tempering temperature: 450 °C or more and 650 °C or less

The cooled clad rolled plate is then heated for tempering. When the tempering temperature is less than 450 °C, decomposition of martensite austenite constituent and recovery of dislocations are insufficient, and the toughness of the base steel plate degrades. The tempering temperature is therefore 450 °C or more. On the other hand, when the tempering temperature exceeds 650 °C, precipitates such as cementite coarsen, causing a degradation in the toughness of the base steel plate. Further, the formation of precipitates may degrade the corrosion resistance of the cladding metal plate. The tempering temperature is therefore 650 °C or less. The tempering temperature is preferably to 500 °C or less.

EXAMPLES

First raw material plates (raw material plates for base steel plates) having the chemical compositions listed in Table 1 (the balance being Fe and inevitable impurity) and second raw material plates (raw material plates for cladding metal plates) of a corrosion-resistant alloy having the chemical compositions listed in Table 2 (the balance being Fe and inevitable impurity) were stacked in the order of the first raw material plate, the second raw material plate, another second raw material plate, and another first raw material plate to form a clad slab, which was then subjected to clad rolling under the conditions listed in Table 3 to form clad rolled plates. The obtained clad rolled plates were then reheated and quenched and then tempered under the conditions listed in Table 3 to produce clad steel plates each having a plate thickness of 35 mm (base steel plate thickness: 32 mm, cladding metal plate thickness: 3 mm). The cooling stop temperature for the natural cooling was 30 °C, and the cooling stop temperature for the reheating quenching was 30 °C.

Test pieces for tensile tests and DWTT tests were taken from the obtained clad steel plates. The tensile tests were carried out in accordance with API-5L to determine the tensile strength TS and the yield stress YS. The DWTT tests were carried out in accordance with API-5L at a test temperature of -30 °C, and the percent shear area DWTT $SA_{-30\,°C}$ was determined. The results are listed in Table 4. The target values for tensile strength and percent shear area DWTT $SA_{-30\,°C}$ were as follows:

Tensile strength: 535 MPa or more
Percent shear area: DWTT $SA_{-30\,°C}$ : 85 % or more

Further, HIC tests were carried out in accordance with NACE Standard TM0284-2003, and the HIC resistance of the base steel plates was evaluated based on the crack area ratio (CAR). The target values for crack area ratio (CAR) were as follows:

Crack area ratio (CAR): 5.0 % or less (1.0 % or less is particularly good)
Crack area ratio (CAR) was measured by immersing 3 test pieces taken from each steel plate in an aqueous solution of 5 mass% NaCl + 0.5 mass% $CH_3COOH$ saturated with hydrogen sulfide for 96 h, and then detecting any defects by ultrasonic testing for the test pieces. The above evaluations were based on the maximum crack area ratio (CAR) measured on the three test pieces. The results are listed in Table 4.

Further, the area fraction and average grain size of bainite at the 1/2 thickness position in the thickness direction of the base steel plate were measured by the methods described above. The results are listed in Table 4.

From Table 4, all of the Examples satisfying claim 1 had a tensile strength of 535 MPa or more and a percent shear area DWTT $SA_{-30\,°C}$ of 85 % or more. Further, all of the Examples satisfying claim 2 had a tensile strength of 535 MPa or more, a percent shear area DWTT $SA_{-30\,°C}$ of 85 % or more, and a CAR of 5.0 % or less. On the other hand, none of the Comparative examples listed in Table 4 obtained the desired properties.

Table 1

| Base metal No. | Chemical composition of first raw material plate/base steel plate (mass%) | | | | | | | | | | | | | | | | Ceq | ACR | $P_{HIC}$ |
|---|---|---|---|---|---|---|---|---|---|---|---|---|---|---|---|---|---|---|---|
| | C | Si | Mn | P | S | Al | Nb | Ti | N | O | Cu | Ni | Cr | Mo | v | Ca | | | |
| A1 | 0.048 | 0.41 | 1.80 | 0.006 | 0.0005 | 0.05 | 0.071 | 0.014 | 0.0051 | 0.0012 | 0.26 | 0.24 | 0.03 | 0.10 | 0.002 | 0.0035 | 0.41 | 4.38 | 1.163 |
| A2 | 0.060 | 0.15 | 1.60 | 0.006 | 0.0006 | 0.03 | 0.051 | 0.014 | 0.0056 | 0.0011 | 0.35 | 0.33 | 0.02 | 0.14 | 0.002 | 0.0026 | 0.40 | 2.71 | 1.172 |
| A3 | 0.079 | 0.21 | 1.15 | 0.007 | 0.0006 | 0.04 | 0.062 | 0.015 | 0.0056 | 0.0014 | 0.43 | 0.44 | 0.02 | 0.35 | 0.030 | 0.0025 | 0.41 | 2.39 | 1.215 |
| A4 | 0.077 | 0.14 | 1.45 | 0.007 | 0.0005 | 0.04 | 0.038 | 0.016 | 0.0055 | 0.0013 | 0.46 | 0.45 | 0.05 | 0.10 | 0.002 | 0.0027 | 0.41 | 3.22 | 1.229 |
| A5 | 0.098 | 0.16 | 1.20 | 0.006 | 0.0005 | 0.03 | 0.024 | 0.020 | 0.0060 | 0.0011 | 0.42 | 0.48 | 0.21 | 0.10 | 0.002 | 0.0028 | 0.42 | 3.52 | 1.238 |
| A6 | 0.041 | 0.16 | 1.60 | 0.008 | 0.0006 | 0.03 | 0.051 | 0.014 | 0.0053 | 0.0012 | 0.33 | 0.35 | 0.21 | 0.14 | 0.002 | 0.0026 | 0.42 | 2.64 | 1.177 |
| A7 | 0.035 | 0.15 | 1.10 | 0.006 | 0.0006 | 0.03 | 0.052 | 0.010 | 0.0045 | 0.0014 | 0.48 | 0.43 | 0.39 | 0.38 | 0.002 | 0.0025 | 0.43 | 2.39 | 1.070 |
| A8 | <u>0.015</u> | 0.12 | <u>0.50</u> | 0.007 | 0.0006 | 0.03 | 0.052 | <u>0.002</u> | 0.0042 | 0.0012 | 0.21 | 0.27 | 0.08 | 0.09 | 0.050 | 0.0025 | <u>0.17</u> | 2.53 | 0.547 |
| A9 | <u>0.108</u> | 0.16 | <u>1.90</u> | 0.007 | 0.0004 | 0.04 | 0.050 | 0.016 | 0.0049 | 0.0011 | 0.26 | 0.21 | 0.03 | 0.14 | 0.090 | 0.0025 | <u>0.51</u> | 3.89 | 1.536 |
| A10 | 0.048 | 0.39 | <u>1.81</u> | 0.006 | <u>0.0040</u> | 0.05 | 0.065 | 0.014 | 0.0051 | 0.0012 | 0.26 | 0.24 | 0.03 | 0.10 | 0.002 | 0.0035 | 0.41 | 0.55 | 1.167 |
| A11 | 0.045 | 0.42 | 1.80 | 0.006 | 0.0005 | 0.05 | 0.055 | 0.014 | 0.0051 | 0.0012 | 0.46 | 0.24 | 0.35 | 0.15 | 0.002 | 0.0035 | 0.49 | 4.38 | 1.268 |
| A12 | 0.078 | 0.30 | 1.75 | 0.003 | 0.0006 | 0.04 | 0.045 | 0.011 | 0.0042 | 0.0015 | 0.50 | - | - | - | - | 0.0004 | 0.40 | 0.07 | 1.164 |
| A13 | 0.075 | 0.29 | 1.79 | 0.003 | 0.0005 | 0.03 | 0.038 | 0.012 | 0.0038 | 0.0012 | - | 0.50 | - | - | - | 0.0003 | 0.41 | 0.06 | 1.165 |
| A14 | 0.065 | 0.31 | 1.46 | 0.005 | 0.0006 | 0.03 | 0.032 | 0.013 | 0.0036 | 0.0013 | - | - | 0.50 | - | - | 0.0003 | 0.41 | 0.02 | 1.096 |
| A15 | 0.039 | 0.27 | 1.58 | 0.006 | 0.0005 | 0.03 | 0.033 | 0.014 | 0.0038 | 0.0017 | - | - | - | 0.50 | - | 0.0004 | 0.40 | 0.01 | 1.127 |
| A16 | 0.090 | 0.25 | 1.72 | 0.004 | 0.0006 | 0.03 | 0.035 | 0.012 | 0.0042 | 0.0015 | - | - | - | - | 0.100 | 0.0004 | 0.40 | 0.07 | 1.205 |
| A17 | 0.098 | 0.22 | 1.79 | 0.002 | 0.0006 | 0.04 | 0.040 | 0.013 | 0.0036 | 0.0015 | - | - | - | - | - | 0.0040 | 0.40 | 3.93 | 1.189 |

17

## EP 4 667 593 A1

Table 2

| Cladding metal No. | Chemical composition of second raw material plate/cladding metal plate (mass%) | | | | | | | | | | | | Alloy type |
|---|---|---|---|---|---|---|---|---|---|---|---|---|---|
| | C | Si | Mn | P | S | Ni | Cr | Mo | Cu | Al | Ti | Nb+Ta | |
| B1 | 0.010 | 0.23 | 0.41 | 0.019 | 0.0003 | 39.5 | 23.4 | 3.14 | 2.17 | 0.13 | 0.73 | - | Alloy 825 |
| B2 | 0.014 | 0.16 | 0.13 | 0.003 | 0.0008 | 60.1 | 22.1 | 9.20 | - | 0.20 | 0.22 | 4.09 | Alloy 625 |
| B3 | 0.015 | 0.61 | 0.76 | 0.021 | 0.0006 | 12.2 | 17.7 | 2.15 | - | - | - | - | SUS 316L |

[Table 3]

Table 3

| Production condition No. | Clad rolling | | Cooling method | Reheating and quenching | | Tempering |
|---|---|---|---|---|---|---|
| | Slab heating temp. (°C) | Rolling finish temp. (°C) | | Reheating temp. (°C) | Average cooling rate (°C/s) | Tempering temp. (°C) |
| C1 | 1150 | 950 | Natural cooling | 950 | 7 | 500 |
| C2 | 1050 | 950 | Natural cooling | 1100 | 7 | 500 |
| C3 | 1150 | 950 | Natural cooling | 950 | 1 | 500 |
| C4 | 1150 | 950 | Natural cooling | 950 | 22 | 500 |
| C5 | 1150 | 950 | Natural cooling | 950 | 7 | 440 |
| C6 | 1150 | 950 | Natural cooling | 950 | 7 | 660 |
| C7 | 1200 | 950 | Natural cooling | 950 | 7 | 500 |
| C8 | 1050 | 950 | Natural cooling | 950 | 7 | 500 |
| C9 | 1150 | 950 | Natural cooling | 1050 | 7 | 500 |
| C10 | 1150 | 950 | Natural cooling | 850 | 7 | 500 |
| C11 | 1150 | 950 | Natural cooling | 950 | 20 | 500 |
| C12 | 1150 | 950 | Natural cooling | 950 | 2 | 500 |
| C13 | 1150 | 950 | Natural cooling | 950 | 7 | 650 |
| C14 | 1150 | 950 | Natural cooling | 950 | 7 | 450 |

[Table 4]

Table 4

| No. | Base metal No. | Cladding metal No. | Production condition No. | Steel microstructure at 1/2 thickness position of base steel plate | | Evaluation result | | | | Classification |
|---|---|---|---|---|---|---|---|---|---|---|
| | | | | Area fraction of bainite (%) | Average grain size of bainite ($\mu$m) | YS (MPa) | TS (MPa) | DWTT SA$_{-30°C}$ (%) | Maximum CAR | |
| 1 | A1 | B1 | C1 | 94 | 21 | 484 | 559 | 94 | 1.4 | Example |
| 2 | A2 | B1 | C1 | 94 | 19 | 484 | 559 | 94 | 0.9 | Example |
| 3 | A3 | B1 | C1 | 95 | 18 | 487 | 562 | 93 | 1.5 | Example |
| 4 | A4 | B1 | C1 | 94 | 21 | 485 | 560 | 94 | 1.5 | Example |
| 5 | A5 | B1 | C1 | 94 | 18 | 485 | 560 | 94 | 1.5 | Example |
| 6 | A6 | B1 | C1 | 94 | 20 | 485 | 560 | 94 | 0.8 | Example |
| 7 | A7 | B1 | C1 | 95 | 21 | 524 | 599 | 93 | 1.1 | Example |
| 8 | <u>A8</u> | B1 | C1 | 11 | 30 | 425 | <u>500</u> | 97 | 0.3 | Comparative Example |
| 9 | <u>A9</u> | B1 | C1 | 95 | 20 | 535 | 610 | 80 | 10.5 | Comparative Example |
| 10 | <u>A10</u> | B1 | C1 | 95 | 21 | 484 | 558 | <u>65</u> | 6.2 | Comparative Example |
| 11 | A11 | B1 | C1 | 96 | 19 | 483 | 595 | 94 | 6.0 | Example |
| 12 | A1 | B1 | C2 | 90 | 28 | 538 | 611 | <u>65</u> | 1.4 | Comparative Example |
| 13 | A1 | B1 | <u>C3</u> | 0 | - | 400 | <u>480</u> | <u>70</u> | 3.5 | Comparative Example |
| 14 | A1 | B1 | <u>C4</u> | 99 | 15 | 550 | 625 | <u>75</u> | 2.3 | Comparative Example |
| 15 | A1 | B1 | <u>C5</u> | 94 | 21 | 474 | 561 | <u>80</u> | 2.2 | Comparative Example |
| 16 | A1 | B1 | <u>C6</u> | 94 | 21 | 494 | 555 | <u>80</u> | 1.2 | Comparative Example |
| 17 | A12 | B1 | C1 | 94 | 20 | 487 | 565 | 85 | 6.9 | Example |
| 18 | A13 | B1 | C1 | 95 | 21 | 489 | 564 | 85 | 6.9 | Example |
| 19 | A14 | B1 | C1 | 94 | 20 | 491 | 563 | 85 | 6.7 | Example |
| 20 | A15 | B1 | C1 | 95 | 21 | 490 | 567 | 85 | 6.8 | Example |
| 21 | A16 | B1 | C1 | 95 | 19 | 487 | 569 | 85 | 7.0 | Example |
| 22 | A17 | B1 | C1 | 94 | 20 | 492 | 566 | 94 | 1.5 | Example |
| 23 | A1 | B2 | C1 | 95 | 21 | 486 | 561 | 94 | 1.5 | Example |
| 24 | A1 | B3 | C1 | 94 | 20 | 488 | 563 | 93 | 1.6 | Example |
| 25 | A1 | B1 | C7 | 94 | 23 | 520 | 595 | 88 | 1.5 | Example |
| 26 | A1 | B1 | C8 | 96 | 18 | 475 | 565 | 96 | 1.4 | Example |
| 27 | A1 | B1 | C9 | 94 | 23 | 519 | 594 | 87 | 1.6 | Example |

(continued)

| No. | Base metal No. | Cladding metal No. | Production condition No. | Steel microstructure at 1/2 thickness position of base steel plate | | Evaluation result | | | | Classification |
|---|---|---|---|---|---|---|---|---|---|---|
| | | | | Area fraction of bainite (%) | Average grain size of bainite ($\mu$m) | YS (MPa) | TS (MPa) | DWTT SA$_{-30°C}$ (%) | Maximum CAR | |
| 28 | A1 | B1 | C10 | 96 | 18 | 474 | 596 | 95 | 1.7 | Example |
| 29 | A1 | B1 | C11 | 96 | 18 | 519 | 594 | 92 | 1.6 | Example |
| 30 | A1 | B1 | C12 | 94 | 22 | 470 | 555 | 92 | 1.7 | Example |
| 31 | A1 | B1 | C13 | 94 | 21 | 489 | 564 | 95 | 1.6 | Example |
| 32 | A1 | B1 | C14 | 94 | 21 | 480 | 560 | 93 | 1.3 | Example |

INDUSTRIAL APPLICABILITY

The clad steel plate produced according to the present disclosure exhibits excellent low-temperature toughness when applied to line pipes for transporting oil or natural gas that are exposed to severe corrosion environments, and is therefore extremely useful industrially.

**Claims**

1.   A method of producing a clad steel plate, the method comprising:

a process of preparing a first raw material plate that has a chemical composition containing, in mass%,

C: 0.020 % or more and 0.100 % or less,
Si: 0.10 % or more and 0.50 % or less,
Mn: 0.75 % or more and 1.80 % or less,
P: 0.015 % or less,
S: 0.0030 % or less,
Al: 0.01 % or more and 0.07 % or less,
Nb: 0.005 % or more and 0.080 % or less,
Ti: 0.005 % or more and 0.030 % or less,
N: 0.0010 % or more and 0.0060 % or less, and
O, oxygen: 0.0030 % or less,

and further, at least one selected from the group consisting of

Cu: 0.50 % or less,
Ni: 0.50 % or less,
Cr: 0.50 % or less,
Mo: 0.50 % or less,
V: 0.100 % or less, and
Ca: 0.0040 % or less,

with the balance being Fe and inevitable impurity, and where Ceq as defined by the following Expression (1) is 0.40 or more and 0.50 or less;
a process of preparing a second raw material plate made of a corrosion-resistant alloy;
a process of stacking the first raw material plate(s) and the second raw material plate(s) to obtain a clad slab;

a process of heating the clad slab to 1050 °C or more and 1200 °C or less;

then a process of hot rolling the clad slab with a rolling finish temperature of 900 °C or more to join the first raw material plate and the second raw material plate, forming a base steel plate and a cladding metal plate, respectively, to obtain a clad rolled plate;

a process of allowing the clad rolled plate to be naturally cooled;

then a process of reheating the clad rolled plate to 850 °C or more and 1050 °C or less;

then a process of cooling the reheated clad rolled plate so that an average cooling rate of the base steel plate is 2 °C/s or more and 20 °C/s or less; and

then a process of tempering the cooled clad rolled plate at 450 °C or more and 650 °C or less;

to produce the clad steel plate by joining the cladding metal plate to one side of the base steel plate,

$$Ceq = C + Mn/6 + (Cu + Ni)/15 + (Cr + Mo + V)/5 \qquad ...(1)$$

where the element symbols in Expression (1) represent content in mass% of each element, and zero is substituted when the element is not contained.

2. The method of producing a clad steel plate according to claim 1, wherein, in the chemical composition of the first raw material plate, the Ca content is, in mass%, 0.0005 % or more and 0.0040 % or less, ACR as defined by the following Expression (2) is 1.00 or more and 6.00 or less, and $P_{HIC}$ as defined by the following Expression (3) is less than 1.250,

$$ACR = \{Ca - (0.18 + 130Ca) \times O\}/(1.25S) \qquad ...(2)$$

$P_{HIC} = 4.46C + 2.37Mn/6 + (1.18Cr + 1.95Mo + 1.74V)/5 + (1.74Cu + 1.7Ni)/15 + 22.36P$ \qquad (3)

where the element symbols in Expression (2) and Expression (3) represent content in mass% of each element, and zero is substituted when the element is not contained.

3. The method of producing a clad steel plate according to claim 1 or 2, wherein the corrosion-resistant alloy is a Ni alloy selected from Alloy 825 and Alloy 625, or an austenitic stainless steel.

4. The method of producing a clad steel plate according to any one of claims 1 to 3, wherein the clad slab is obtained by stacking, in the following order: a first raw material plate, a second raw material plate, another second raw material plate, and another first raw material plate, and by applying separating agent between the two second raw material plates, thereby obtaining two clad rolled plates by the hot rolling, and

after the tempering, the two clad rolled plates are separated with the separating agent.

## INTERNATIONAL SEARCH REPORT

| International application No. |
| --- |
| **PCT/JP2024/011140** |

| A. | CLASSIFICATION OF SUBJECT MATTER |
| --- | --- |

*C21D 8/02*(2006.01)i; *B21B 1/22*(2006.01)i; *B32B 15/01*(2006.01)i; *C21D 9/00*(2006.01)i; *C22C 19/05*(2006.01)i; *C22C 38/00*(2006.01)i; *C22C 38/58*(2006.01)i; *C22F 1/10*(2006.01)i; *C22F 1/00*(2006.01)n
FI:  C21D8/02 Z; C21D9/00 Z; C22C38/00 301Z; C22C38/58; C22C38/00 302Z; C22F1/10 H; C22F1/10 Z; B21B1/22 B; B32B15/01 C; C22C19/05 Z; C22F1/00 694B; C22F1/00 692A; C22F1/00 691B; C22F1/00 684C; C22F1/00 683; C22F1/00 682; C22F1/00 650B; C22F1/00 640Z; C22F1/00 640A; C22F1/00 627; C22F1/00 623

According to International Patent Classification (IPC) or to both national classification and IPC

| B. | FIELDS SEARCHED |
| --- | --- |

Minimum documentation searched (classification system followed by classification symbols)

C21D8/02; B21B1/22; B32B15/01; C21D9/00; C22C19/05; C22C38/00-38/60; C22F1/10; C22F1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-7055 A (JFE STEEL CORPORATION) 17 January 2019 (2019-01-17) entire text | 1-4 |
| A | JP 2014-101568 A (JFE STEEL CORPORATION) 05 June 2014 (2014-06-05) entire text | 1-4 |
| A | JP 2016-108665 A (JFE STEEL CORPORATION) 20 June 2016 (2016-06-20) entire text | 1-4 |
| A | JP 5-261567 A (NIPPON STEEL CORPORATION) 12 October 1993 (1993-10-12) entire text | 1-4 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/011140**

| Patent document cited in search report | | | Publication date (day/month/year) | Patent family member(s) | Publication date (day/month/year) |
|---|---|---|---|---|---|
| JP | 2019-7055 | A | 17 January 2019 | (Family: none) | |
| JP | 2014-101568 | A | 05 June 2014 | (Family: none) | |
| JP | 2016-108665 | A | 20 June 2016 | (Family: none) | |
| JP | 5-261567 | A | 12 October 1993 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015086422 A
- JP 2015117408 A
- JP 2015105399 A
- WO 2018181381 A1
- WO 2020004410 A1